# EUROPÄISCHE PATENTANMELDUNG

(11) **EP 2 551 477 A1**
(43) Veröffentlichungstag der Anmeldung: **30.01.2013**
(21) Anmeldenummer: 11175948.6
(22) Anmeldetag: 29.07.2011
(51) Int. Cl.: F01K 23/10

(54) **Verfahren und fossilbefeuerte Kraftwerksanlage zur Rückgewinnung eines Kondensats**

(71) Anmelder: SIEMENS AKTIENGESELLSCHAFT, 80333 München (DE)
(72) Erfinder: Schneider, Rüdiger Dr., 65817 Eppstein (DE); Schramm, Henning Dr., 60596 Frankfurt am Main (DE)

(57) **Zusammenfassung**

Die Erfindung betrifft eine fossilbefeuerte Kraftwerksanlage (10) mit einer Verbrennungsvorrichtung (11), einer der fossilbefeuerten Kraftwerksanlage (10) nach geschalteten CO₂ Abscheidevorrichtung (16) zur Abscheidung von CO₂ und eine der CO₂ Abscheidevorrichtung (16) nach geschaltete CO₂ Verdichterstation (17) mit einer Anzahl an Verdichterstufen (50) und Kühler (51) zur Zwischenkühlung. Erfindungsgemäß sind die Kühler (51) zur Rückgewinnung von Kondensat über Kondensatleitung (52, 53, 60, 61) mit der CO₂ Abscheidevorrichtung (16) oder der fossilbefeuerten Kraftwerksanlage (10) verbunden. Die Erfindung betrifft außerdem ein Verfahren zur Durchführung der Kondensat-Rückgewinnung.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Lösungsmittel aus dem Rauchgas herausgewaschen (CO₂ Capture Prozess).

Gebräuchliche Absorptionsmittel sind wässrige Lösungen eines waschaktiven Zusatzstoffes, wie beispielsweise Methanlolamin (MEA), Aminosäuresalze oder Pottasche. Diese waschaktiven Zusatzstoffe zeigen eine gute Selektivität und eine hohe Kapazität für Kohlendioxid (C0₂).

Im Betrieb des CO₂ Capture-Prozesses verdampft aber auch immer kontinuierlich ein Teil des Wassers. Der Wasserdampf wird zusammen mit dem von CO₂ gereinigten Rauchgas aus dem Absorber ausgetragen. Durch den Austrag von Wasser aus dem Absorptionsmittelkreislauf verändert sich das Verdünnungsverhältnis zwischen Wasser und den waschaktiven Zusatzstoffen wie Amine, Aminosäuresalze, oder Pottasche. Daher muss dem Absorptionsmittelkreislauf kontinuierlich ein Makeup-Wasser zugeführt werden, um das durch Verdampfung ausgetragene Wasser zu kompensieren.

Zur Nachspeisung von Makeup-Wasser wird häufig ein Ent- oder Demineralisiertes Wasser (Demin-Wasser) verwendet. Für die Bereitstellung dieses Wassers fallen teils hohe Kosten an. Bei Kraftwerksanlagen, die mit einer CO₂ Abscheidevorrichtung nachgerüstet werden, muss im gleichen Zuge eine Demin-Wasser-Aufbereitungsanlage mit bereitgestellt werden, die hohe Investions- und Betriebskosten mit sich bringt. Derartige Demin-Wasser-Aufbereitungsanlagen werden auch bereits in einem erforderlichen Volumen bei Kraftwerksanlagen aufgestellt, die als Capture-Ready Anlage lediglich eine spätere Nachrüstung oder Einbau eines CO₂ Abscheideprozesses vorbereitet sind. Bei Kraftwerksanlagen, die noch nicht Capture-Ready vorbereitet sind, ist es erforderlich im Zuge der Nachrüstung einer CO₂ Abscheidevorrichtung die bestehende Demin-Wasser-Aufbereitungsanlage des Kraftwerks zu erweitern.

Aufgabe der Erfindung ist es daher, eine fossilbefeuerte Kraftwerksanlage bereit zu stellen, durch die die Kosten für die Installation und den Betrieb einer Demin-Wasser-Aufbereitungsanlage trotz Installation einer an die Kraftwerksanlage angeschlossenen CO₂ Abscheidevorrichtung senken reduzieren lassen. Aufgabe der Erfindung ist es außerdem, ein Verfahren zur Rückgewinnung von Kondensat anzugeben, durch dass die Demin-Wasser-Aufbereitungsanlage eines Kraftwerks mit angeschlossener CO₂ Abscheidevorrichtung entlastet werden kann.

Die Aufgabe wird gelöst durch eine fossilbefeuerte Kraftwerksanlage nach den Merkmalen des Anspruchs 1. Demnach umfasst die fossilbefeuerte Kraftwerksanlage einer fossilbefeuerten Verbrennungsvorrichtung, bei der durch die Verbrennung fossiler Brennstoffe ein CO₂ haltiges Rauchgas gebildet wird. Der Kraftwerksanlage ist eine CO₂ Abscheidevorrichtung zur Abscheidung von CO₂ aus dem Rauchgas nachgeschaltet. Diese umfasst einem Absorber und einen Desorber die in einen Absorptionsmittelkreislauf geschaltet sind. Zur Verflüssigung des in der CO₂ Abscheidevorrichtung abgetrennten CO₂ ist der CO₂ Abscheidevorrichtung eine CO₂ Verdichterstation nachgeschaltet, die mit dem Desorber zur Ausleitung von abgeschiedenem CO₂ verbunden ist. Die Verdichterstation umfasst dabei einen Verdichter mit einer Anzahl an Verdichterstufen, wobei zwischen den Verdichterstufen jeweils ein Kühler zur Kühlung des verdichteten CO₂ geschaltet ist. Erfindungsgemäß wird nun das Kondensat, welches bei der Kühlung des verdichteten CO₂ gebildet wird, über eine Kondensatleitung der CO₂ Abscheidevorrichtung und/oder der fossilbefeuerten Kraftwerksanlage zurück geführt.

Die Erfindung macht sich dabei zu Nutze, dass das Kondensat, welches bei der Verdichtung des CO₂ anfällt, eine hohe Qualität besitzt. Die Weiterverwendung des Kondensats ist auch deswegen besonders vorteilhaft, da bei der Verdichtung des CO₂ große Mengen an Kondensat anfallen. In die Kondensatleitung können dabei noch Filter oder weitere Abscheider geschaltet sein, um Rückstände, die sich im Kondensat befinden, herauszufiltern.

Durch die erfindungsgemäße Verbindung des Kühlers des CO₂ Verdichters über eine Kondensatleitung mit der CO₂ Abscheidevorrichtung oder der fossilbefeuerten Kraftwerksanlage kann bei Neubau der Kraftwerksanlage die Demin-Wasser-Aufbereitungsanlage entsprechend kleiner ausgeführt werden, da sie nur einen wesentlich verringerte Menge an Demin-Wasser für die CO₂ Abscheidevorrichtung bereitstellen muss.

Bei einer besonders günstigen Weiterentwicklung ist die Kondensatleitung mit einer Demin-Wasser-Aufbereitungsanlage der fossilbefeuerten Kraftwerksanlage zur Bereitstellung eines demineralisierten Wassers verbunden ist, sodass ein bei der Zwischenkühlung des CO₂ kondensierendes Wasser der Aufbereitungsanlage als vorgereinigtes Wasser bereitstellbar ist. In der Aufbereitungsanlage wird das Kondensat dabei noch von den restlichen Verunreinigungen, wie insbesondere Reste an aktiven Zusatzstoffen oder CO₂ befreit.

Bei einer weiteren bevorzugten Ausführungsform der Erfindung ist die Kondensatleitung direkt mit dem Absorptionsmittelkreislauf der CO₂ Abscheidevorrichtung verbunden, sodass ein bei der Zwischenkühlung des CO₂ kondensierendes Wasser direkt als Makeup-Wasserstrom für die CO₂ Abscheidevorrichtung bereitgestellbar ist. Besonders von Vorteil ist es dabei, wenn in die Kondensatleitung ein Speicher für Kondensat geschaltet ist, sodass sich das Kondensat zwischenspeichern lässt. Darüber hinaus kann auch eine Regelvorrichtung in die Kondensatleitung geschaltet sein, sodass das Kondensat der CO₂ Abscheidevorrichtung gezielt geregelt zuführbar ist.

Alternativ oder in Kombination mit dem Anschluss der Kondensatleitung an die CO₂ Abscheidevorrichtung kann die Kondensatleitung mit einem Wasser-Dampf-Kreislauf der fossilbefeuerten Kraftwerksanlage verbunden sein, sodass ein bei der Zwischenkühlung des CO₂ kondensierendes Wasser als Speisewasser für das Kraftwerk bereitstellbar ist. Möglich ist auch hier eine Zwischenspeicherung, bzw. ein Regelprozess, der abhängig vom nachzuführenden Speisewasser entsprechend Kondensat in den Wasser-Dampf-Kreislauf einleitet. Vorteilhaft ist dabei die Einleitung des Kondensats in den Kondensator des Wasser-Dampf-Kreislaufs, da durch das Kondensat die Kondensation im Kondensator begünstigt wird. Sinnvoll ist auch eine Regelung, die je nach Bedarf an nachzuführendem Wasser, das Kondensat entweder als Makeup-Wasser dem CO₂ Abscheideprozess, oder als Speisewasser dem Wasser-Dampfkreislauf leitet oder aufteilt.

Das Kondensat kann auch vorteilhaft als Prozesswasser für das Kraftwerk bereitgestellt werden. Im konventionellen Kraftwerk zur Energieerzeugung besteht an verschiedenen Stellen für Zusatzprozesse Bedarf an Demin-Wasser. Dazu ist es vorgesehen, dass die Kondensatleitung mit einer Prozesswasserleitung der fossilbefeuerten Kraftwerksanlage verbunden ist, sodass das bei der Zwischenkühlung des CO₂ kondensierende Wasser als Kondensat verschiedenen Prozessen zuführbar ist.

Die auf ein Verfahren gerichtete Aufgabe der Erfindung wird gelöst durch die Merkmale des Anspruchs 6. Zur Rückgewinnung von Kondensat und zur Entlastung einer Wasser-Aufbereitungsanlage, die Bestandteil eines fossilbefeuerten Kraftwerkprozesses ist, wird ein Kondensat aus der Zwischenkühlung einer Verdichtung von CO₂ wieder dem der Kraftwerksanlage nachgeschalteten CO₂ Abscheideprozess oder dem Kraftwerksprozess zurück geführt.

Zweckmäßigerweise wird das Kondensat dabei einem den Kraftwerksprozess umfassenden Aufbereitungsprozess für demineralisiertes Wasser (Demin-Wasser-Aufbereitungsanlage) als vorgereinigtes Wasser zugeführt wird. Dadurch wird der Wasser-Aufbereitungsprozess erheblich entlastet, da weniger mineralisiertes Frischwasser in den Prozess von außen eingebracht werden muss.

Besonders vorteilhaft ist auch, das Kondensat dem CO₂ Abscheideprozess einem einen Absorptions- und Desorptionsprozess umspannenden Wasserkreislauf als Makeup-Wasser zugeführt wird. Alternativ oder ergänzend dazu ist es auch von Vorteil, wenn das Kondensat einem Wasser-Dampf-Kreislauf des Kraftwerksprozesses als Speisewasser zugeführt wird. Ebenso alternativ oder in Ergänzung Rückführung als Makeup-Wasser oder Speisewasser, kann das Kondensat einem an dem Kraftwerksprozess angeschlossenen Prozess auch als Prozesswasser zugeführt werden.

In Kombination mit einem Aminosäuresalz als waschaktive Substanz eignet sich das Verfahren besonders vorteilhaft, da das Aminosäuresalz im Vergleich zu Aminen keinen merklichen Dampfdruck hat, und somit auch nicht durch das Kondensat aus dem CO₂ Abscheideprozess ausgetragen werden kann. Das Kondensat hat also bei der Verwendung von Aminosäuresalzen eine besonders hohe Reinheit, da es frei von waschaktiven Substanzen oder Rückständen davon ist.

Im Folgenden werden Ausführungsbeispiele der Erfindung anhand von Figuren näher erläutert. Darin zeigt:
- FIG 1: eine fossilbefeuerte Kraftwerksanlage mit einer Kondensatrückführleitung in den Absorptionsmittel- kreislauf und in den Wasser-Dampf-Kreislauf der Kraftwerksanlage,
- FIG 2: Verfahren zur Entlastung einer Wasser-Aufbereitungsanlage eines fossilbefeuerten Kraftwerks mit einer CO₂ Abscheidevorrichtung

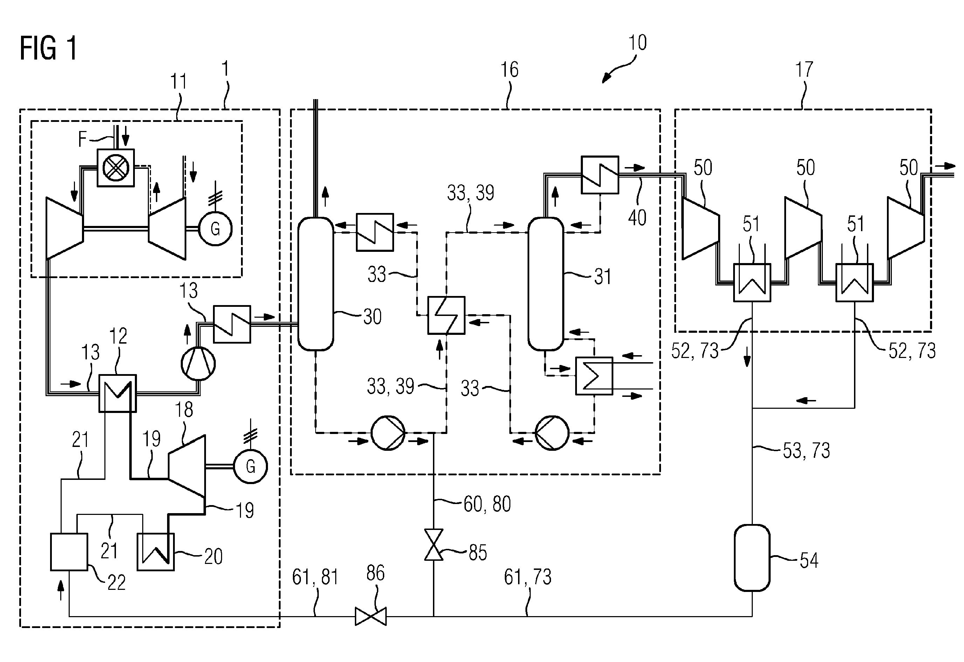

FIG 1 zeigt eine einer fossilbefeuerte Kraftwerksanlage 10, mit einer Gasturbinenanlage als Verbrennungsvorrichtung 11, einem der Gasturbine der Verbrennungsvorrichtung 11 über einen Rauchgaskanal 13 nachgeschalteten Abhitzedampferzeuger 12, einen Kondenstor 20, eine Demin-Wasser-Aufbereitungsanlage 22, eine in den Rauchgaskanal 13 geschaltete CO₂ Abscheidevorrichtung 16, und ein der CO₂ Abscheidevorrichtung 16 nachgeschalteter Verdichter 17 mit einer Anzahl an Verdichter- und Zwischenkühlstufen 50, 51.

In der Gasturbinenanlage der Verbrennungsvorrichtung 11 wird ein fossiler Brennstoff verbrannt, wobei ein CO₂ haltiges Rauchgas gebildet wird. Das Rauchgas wird dem Abhitzedampferzeuger 12 über einen Rauchgaskanal 13 zur Erzeugung eines Dampfes 19 zugeführt. Der Dampf 19 wird wiederum einer hier nicht näher dargestellten Dampfturbinenanlage 18 zugeführt, wo er entspannt, und anschließend einem Kondensator 20 zugeführt, und zu Speisewasser 21 entspannt wird. Nach der Kondensation des Dampfes 19 im Kondensator wird das Speisewasser 21 einer Demin-Wasser-Aufbereitungsanlage 22 zugeführt. Die Demin-Wasser-Aufbereitungsanlage 22 ist wiederum zur Rückführung des Speisewassers mit dem Abhitzedampferzeuger 12 über eine Speisewasserleitung 21 verbunden. Die Leitung für den Dampf 19 und die Leitung für das Speisewasser 21 bilden einen Wasser-Dampf-Kreislauf.

Der Abhitzedampferzeuger 12 ist zur Ausleitung des Rauchgases 13 an die CO₂ Abscheidevorrichtung 16 angeschlossen. Die CO₂ Abscheidevorrichtung 16 besteht im Wesentlichen aus einem Absorber 30 und einem Desorber 31, die in einen Absorptionsmittelkreislauf 33 geschaltet sind. Im Absorptionsmittelkreislauf 33 sind diverse Wärmetauscher Ventile und Pumpen vorgesehen, auf die nicht weiter eingegangen wird. Die CO₂ Abscheidevorrichtung 16 verlässt ein weitgehend von anderen Bestandteilen befreites gasförmiges CO₂ 40, dass dem Verdichter 17 zugeführt wird.

Der Verdichter 17 besteht aus einer Anzahl an Verdichterstufen 50 und aus zwischen den Verdichterstufen angeordneten Zwischenkühlern oder Kühlerstufen 51. Die Zwischenkühler 51 weisen einen Kondensatabzug 52 auf, die in einer Kondensatabführleitung 53 zusammen laufen. Die Kondensatabführleitung 53 ist mit einem Kondensat Speicherbehälter 54 verbunden.

Der Speicherbehälter 54 wiederum über eine Kondensatleitung 60 mit dem Absorptionsmittelkreislauf 33 verbunden. Vorzugsweise mit der Leitung für das beladene Absorptionsmedium 39. In die Kondensatleitung 60 ist dabei ein Regelventil 85 geschaltet, über welches die Menge an zugeführtem Kondensat einstellbar ist. An den Speicherbehälter 54 ist auch eine Kondensatleitung 61 angeschlossen, die den Speicherbehälter 54 mit der Demin-Wasser-Aufbereitungsanlage 22 verbindet. Auch in die Kondensatleitung 61 ist ein Regelventil 86 zur Regelung des Kondensatstroms geschaltet. Nicht dargestellt sind Pumpen oder Auslassventile, die ebenfalls in die Kondensatleitungen 60, 61 geschaltet sein können.

Ebenfalls nicht dargestellt ist eine weitere Kondensatleitung, die den Speicherbehälter 54 mit dem Wasser-Dampf-Kreislauf der Dampfturbinenanlage 18 verbindet.

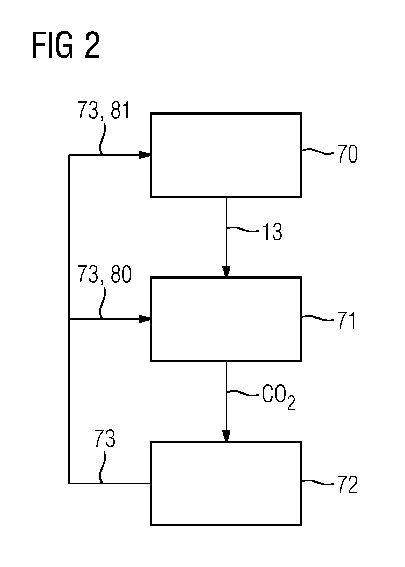

FIG 2 zeigt ein Verfahren zur Entlastung einer Wasser-Aufbereitungsanlage eines fossilbefeuerten Kraftwerks mit einer CO₂ Abscheidevorrichtung, umfassend einen Kraftwerksprozess 70, einem den Kraftwerksprozess 70 nachgeschalteten CO₂ Abscheideprozess 71, und einem dem CO₂ Abscheideprozess nachgeschalteter Verdichterprozess 72. In dem Kraftwerksprozess 70 wird ein Rauchgas 13 erzeugt, dass dem CO₂ Abscheideprozess 71 zur Abscheidung zugeleitet wird. In dem CO₂ Abscheideprozess wird CO₂ von dem Rauchgas 13 abgetrennt. Das abgetrennte, gasförmige CO₂ wird im Folgenden dem Verdichterprozess 72 zugeführt, wo es, wie hier allerdings nicht näher dargestellt, in mehreren Prozessstufen verdichtet wird. Zwischen den Verdichterstufen erfolgt eine Kühlung des CO₂, wobei ein Kondensat 73 gebildet wird. Das Kondensat wird nun als Makeup-Wasser 80 dem CO₂ Abscheideprozess 71 und alternativ dazu oder gleichzeitig als Speisewasser 81 wieder in den Kraftwerksprozess 70 zurück geführt. Das Makeup-Wasser 80 wird dabei vorzugsweise in den Strom mit beladenem Absorptionsmedium eingebracht. Das Speisewasser 81 wird vorzugsweise in den Kondensator oder in eine die Kraftwerksanlage umfassende Wasser-Aufbereitungsanlage eingebracht.

## Patentansprüche

1. Fossilbefeuerte Kraftwerksanlage (10) umfassend eine fossilbefeuerten Verbrennungsvorrichtung (11) unter Abscheidung von Rauchgas (13), eine der fossilbefeuerten Kraftwerksanlage (1) nach geschalteten CO₂ Abscheidevorrichtung (16), zur Abscheidung von CO₂ aus dem Rauchgas (13), umfassend einem Absorber (30) und einen Desorber (31) die in einen Absorptionsmittelkreislauf (33) geschaltet sind, und eine der CO₂ Abscheidevorrichtung (16) nach geschaltete CO₂ Verdichterstation, die mit dem Desorber (31) zur Ausleitung von abgeschiedenem CO₂ verbunden ist, und zur Verflüssigung des abgeschiedenen CO₂ einen Verdichter (17) mit einer Anzahl an Verdichterstufen (50) umfasst, wobei zwischen den Verdichterstufen (50) ein oder mehrere Kühler (51) zur Zwischenkühlung des verdichteten CO₂ geschaltet sind,
**dadurch gekennzeichnet, dass** die Kühler (51) über eine Kondensatleitung (52, 53, 60, 61) mit der CO₂ Abscheidevorrichtung (16) und/oder der fossilbefeuerten Kraftwerksanlage (1) verbunden ist.

2. Fossilbefeuerte Kraftwerksanlage (10) nach Anspruch 1, **dadurch gekennzeichnet, dass** die Kondensatleitung (60) mit dem Absorptionsmittelkreislauf (33) der CO₂ Abscheidevorrichtung (16) ist, sodass ein bei der Zwischenkühlung des CO₂ kondensierendes Wasser als Makeup-Wasserstrom (80) für die CO₂ Abscheidevorrichtung (16) bereitstellbar ist.

3. Fossilbefeuerte Kraftwerksanlage (10) nach Anspruch 1 oder 2, **dadurch gekennzeichnet, dass** die Kondensatleitung (61) mit einem Wasser-Dampf-Kreislauf (19, 21) der fossilbefeuerten Kraftwerksanlage (10) verbunden ist, sodass ein bei der Zwischenkühlung des CO₂ kondensierendes Wasser als Speisewasser (81) für die fossilbefeuerte Kraftwerksanlage (10) bereitstellbar ist.

4. Fossilbefeuerte Kraftwerksanlage (10) nach einem der Ansprüche 1 bis 3, **dadurch gekennzeichnet, dass** die Kondensatleitung (61) mit einer Prozesswasserleitung des fossilbefeuerten Kraftwerksanlage (10) verbunden ist, sodass ein bei der Zwischenkühlung des CO₂ kondensierendes Wasser als Prozesswasser für die fossilbefeuerte Kraftwerksanlage (10) bereitstellbar ist.

5. Fossilbefeuerte Kraftwerksanlage (10) nach einem der Ansprüche 1 bis 4, **dadurch gekennzeichnet, dass** die Kondensatleitung (61) mit einer Aufbereitungsanlage der fossilbefeuerten Kraftwerksanlage zur Bereitstellung eines demineralisierten Wassers verbunden ist, sodass ein bei der Zwischenkühlung des CO₂ kondensierendes Wasser der Aufbereitungsanlage als vorgereinigtes Wasser bereitstellbar ist.

6. Verfahren zur Rückgewinnung von Kondensat (73), welches Bestandteil eines fossilbefeuerten Kraftwerkprozesses (70) ist, dem ein CO₂ Abscheideprozess (71) nachgeschaltet ist, wobei dem CO₂ Abscheideprozess (71) ein Verdichterprozess (72) nachgeschaltet ist, der aus einer Anzahl an Prozessstufen besteht, denen ein jeweils ein Kühlprozess zwischengeschaltet ist, bei dem aus den Kühlprozessen ein Kondensat (73) abgezogen wird, und das abgezogene Kondensat (73) wieder dem CO₂ Abscheideprozess (71) oder dem fossilbefeuerten Kraftwerkprozesses (70) zurück geführt wird.

7. Verfahren nach Anspruch 6, bei dem das Kondensat (73) dem CO₂ Abscheideprozess (71) einem einen Absorptions- und Desorptionsprozess umspannenden Wasserkreislauf als Makeup-Wasser (80) zugeführt wird.

8. Verfahren nach einem der Ansprüche 6 oder 7, bei dem das Kondensat (73) einem Wasser-Dampf-Kreislauf des Kraftwerksprozesses als Speisewasser (81) zugeführt wird.

9. Verfahren nach einem der Ansprüche 6 bis 8, bei dem das Kondensat (73) einem an dem Kraftwerksprozess angeschlossenen Prozess als Prozesswasser zugeführt wird.

10. Verfahren nach einem der Ansprüche 6 bis 9, bei dem das Kondensat (73) einem den Kraftwerksprozess umfassenden Aufbereitungsprozess für demineralisiertes Wasser als vorgereinigtes Wasser zugeführt wird.
